(19) Europäisches Patentamt
European Patent Office
Office européen des brevets

(11) **EP 1 511 198 B1**

(12) **EUROPÄISCHE PATENTSCHRIFT**

(45) Veröffentlichungstag und Bekanntmachung des Hinweises auf die Patenterteilung:
**12.09.2012   Patentblatt 2012/37**

(51) Int Cl.:
***H04B 10/158*** *(2006.01)*

(21) Anmeldenummer: **04090278.5**

(22) Anmeldetag: **15.07.2004**

(54) **Optische Empfängerschaltung**

Optical receiver cicuit

Circuit récepteur optique

(84) Benannte Vertragsstaaten:
**DE FR GB**

(30) Priorität: **27.08.2003   US 649602**

(43) Veröffentlichungstag der Anmeldung:
**02.03.2005   Patentblatt 2005/09**

(73) Patentinhaber: **Avago Technologies Fiber IP (Singapore) Pte. Ltd.**
**Singapore 768923 (SG)**

(72) Erfinder: **Schrödinger, Karl**
**14089 Berlin (DE)**

(74) Vertreter: **Dilg, Haeusler, Schindelmann**
**Patentanwaltsgesellschaft mbH**
**Leonrodstrasse 58**
**80636 München (DE)**

(56) Entgegenhaltungen:
**EP-A- 0 409 278     EP-A- 1 261 152**
**US-A- 5 410 145**

**Beschreibung**

Technisches Gebiet:

Die Erfindung bezieht sich auf eine optische Empfängerschaltung mit einer optischen Empfangseinrichtung und einer nachgeschalteten Verstärkereinrichtung. Auf die Empfangseinrichtung (z. B. Fotodiode) einfallendes Licht - beispielsweise Licht aus einem optischen Lichtwellenleiter eines optischen Datenübertragungssystems - wird von der Empfangseinrichtung unter Bildung eines elektrischen Signals (z. B. Fotostrom) detektiert; anschließend wird das elektrische Signal von der nachgeschalteten Verstärkereinrichtung verstärkt.

Optische Empfängerschaltungen dieser Art benötigen eine sehr hohe Empfindlichkeit, da die zu empfangenden optischen Lichtsignale und damit die von der Empfangseinrichtung gebildeten elektrischen Signale in der Regel sehr klein sind. Aus diesem Grunde ist auch die Störempfindlichkeit sehr hoch; dies bedeutet, dass hochfrequente Störungen - beispielsweise auf der Versorgungsspannung der optischen Empfängerschaltung und/oder eingestrahlte elektromagnetische Störungen (EMI: Electromagnetic Interference) - die Funktionsfähigkeit der optischen Empfängerschaltung in erheblicher Weise beeinträchtigen können.

Um Störungen von Außen zu vermeiden, wird bei den vorbekannten optischen Empfängerschaltungen ein erheblicher Aufwand an elektromagnetischer Schirmung betrieben. Insbesondere werden erhebliche Anstrengungen unternommen, hochfrequente Störungen, beispielsweise auf der Versorgungsspannung, zu unterdrücken.

Es ist offensichtlich, dass diese Schirmungsmaßnahmen zu erheblichen Zusatzkosten bei der Herstellung der vorbekannten Empfängerschaltungen führen.

Eine vorbekannte optische Empfängerschaltung mit einer Empfangseinrichtung und einem nachgeschalteten Verstärker ist beispielsweise in dem Artikel "High Gain Transimpedance Amplifier in InP-Based HBT Technology for the Receiver in 40-Gb/s Optical-Fiber TDM Links" (Jens Müllrich, Herbert Thurner, Ernst Müllner, Joseph F. Jensen, Senior Member, IEEE, William E. Stanchina, Member, IEEE, M. Kardos, and Hans-Martin Rein, Senior Member, IEEE - IEEE Journal of Solid State Circuits, vol. 35, No. 9, September 2000, Seiten 1260 bis 1265) beschrieben. Bei dieser Empfängerschaltung ist eingangsseitig ein differenziell betriebener Transimpedanzverstärker - also ein Differenzverstärker - vorhanden, der mit einem Eingang an eine Fotodiode als Empfangseinrichtung angeschlossen ist. Der andere Eingang des differenziell betriebenen Transimpedanzverstärkers ist mit einem Gleichstromverstärker verbunden, der einen "Korrekturstrom" zur Offset-Korrektur des Fotostromes der Fotodiode in den Differenzverstärker einspeist. Die Größe dieses eingespeisten "Korrekturstromes" beträgt die Hälfte des Stromhubs der Fotodiode im Betrieb.

EP 1 261 152 A2 offenbart eine Licht empfangende Schaltung, welche mit zwei Photodioden ausgestattet ist, die identische Eigenschaften in einer identischen Form und Größe aufweisen. Nur eine der Photodioden wird verwendet zum Empfangen des optischen Signals von einem Licht emittierenden Element, während die andere Photodiode gegenüber dem Licht abgeschirmt ist. Ausgangsströme der Photodioden werden durch I/V-Konvertierverstärker in Spannungen konvertiert und werden gegeneinander verglichen durch einen Hysteresevergleicher in Form eines Differenzverstärkers.

US 5,410,145 betrifft einen Detektor, welcher in Sperrichtung vorgespannte Photodioden mit Dunkelstromkompensation verwendet. Die Schaltung umfasst einen Operationsverstärker, welcher für eine negative Rückkopplung unter Verwendung eines Widerstandes von einem invertierenden Anschluss to einem Ausgangsanschluss konfiguriert ist.

EP 0 409 278 B1 betrifft einen monostabilen Multivibrator, welcher in einer Video- oder Tonreproduktionsschaltung in einem Videorecorder verwendet wird. Ein variabler Filter arbeitet als Bandeliminationsfilter, dessen Charakteristik durch Steuern von Strömen von Konstantstromschaltungen veränderbar ist.

Zusammenfassung der Erfindung:

Der Erfindung liegt die Aufgabe zugrunde, eine optische Empfängerschaltung anzugeben, die gegenüber externen Störsignalen störunempfindlich ist.

Diese Aufgabe wird erfindungsgemäß durch eine optische Empfängerschaltung mit den Merkmalen gemäß Patentanspruch 1 gelöst. Vorteilhafte Ausgestaltungen der Erfindung sind in Unteransprüchen angegeben.

Danach ist erfindungsgemäß eine optische Empfängerschaltung mit einer optischen Empfangseinrichtung und einem nachgeschalteten Differenzverstärker vorgesehen. Die Empfangseinrichtung ist dabei an einen der zwei Eingänge des Differenzverstärkers angeschlossen. An den anderen der beiden Eingänge des Differenzverstärkers ist ein das elektrische Verhalten der Empfangseinrichtung im "beleuchtungsfreien Fall" nachbildendes elektrisches Element angeschlossen. Unter einem "beleuchtungsfreien Fall" wird dabei verstanden, dass sich das elektrische Element elektrisch weitestgehend genauso verhält wie die Empfangseinrichtung, wenn kein zu detektierendes Licht auf die Empfangseinrichtung auftrifft.

Ein wesentlicher Vorteil der erfindungsgemäßen optischen Empfängerschaltung ist darin zu sehen, dass diese besonders störunempfindlich ist. Dies wird bei der erfindungsgemäßen Empfängerschaltung durch das "volldifferenzielle" Design der Schaltung bzw. die quasi symmetrische eingangsseitige Beschaltung des Differenzverstärkers erreicht. Das volldifferenzielle Design beruht dabei auf dem erfindungsgemäßen elektrischen Element, das das elektrische Verhalten der Empfangseinrichtung im beleuchtungsfreien Fall nachbildet. Aufgrund des elektrischen Elements ist der Differenzverstärker symmetrisch beschaltet, so dass hochfrequente Störungen effektiv unterdrückt werden. Hochfrequente Störungen werden nämlich aufgrund der symmetrischen eingangsseitigen Beschaltung des Differenzverstärkers an beiden Eingängen des Differenzverstärkers gleichzeitig auftreten, so dass die Störungen dank der bei Differenzverstärkern stets hohen Gleichtaktunterdrückung weitestgehend unterdrückt werden.

Die erfindungsgemäße optische Empfängerschaltung unterscheidet sich damit wesentlich von den eingangs erwähnten vorbekannten Empfängerschaltungen, die zwar eingangsseitig einen Differenzverstärker aufweisen, jedoch eingangsseitig asymmetrisch beschaltet sind. Potentielle Störelemente, wie beispielsweise ein Bonddraht der Empfangseinrichtung, die Kapazität der Empfangseinrichtung sowie weitere kapazitive Aufbauelemente - beispielsweise Kapazitäten und Induktivitäten im Bereich der Empfangseinrichtung - treten beim Stand der Technik damit ausschließlich an einem Anschluss des Differenzverstärkers auf und werden somit unmittelbar verstärkt. Die Störsignale gelangen bei der vorbekannten "asymmetrischen" Beschaltung des Differenzverstärkers somit zu der "empfindlichsten Stelle" der optischen Empfängerschaltung und werden unmittelbar verstärkt. Im Unterschied dazu werden bei der erfindungsgemäßen Empfängerschaltung die Störsignale "quasi" herausgefiltert bzw. wirkungsvoll unterdrückt, und zwar aufgrund der symmetrischen Beschaltung des Differenzverstärkers mit Hilfe des das Verhalten der Empfangseinrichtung im unbeleuchteten Fall nachbildenden Elements und aufgrund der Gleichtaktunterdrückung des Differenzverstärkers.

Zusammengefasst lässt sich damit feststellen, dass bei der erfindungsgemäßen optischen Empfängerschaltung ein besonders hohes Maß an Störunempfindlichkeit durch die symmetrische eingangsseitige Beschaltung des Differenzverstärkers der Empfängerschaltung erreicht wird.

Ein weiterer wesentlicher Vorteil der erfindungsgemäßen optischen Empfängerschaltung besteht darin, dass diese kostengünstiger herstellbar als die vorbekannten Empfängerschaltungen, da auf aufwändige Schirmungsmaßnahmen zum Unterdrücken von Störeinflüssen aufgrund der "inneren" Störunterdrückung durch den Differenzverstärker weitgehend verzichtet werden kann.

Um zu erreichen, dass die optische Empfängerschaltung eine besonders hohe Verstärkung erreicht, ist gemäß einer vorteilhaften Weiterbildung der Empfängerschaltung vorgesehen, dass die Empfangseinrichtung und das elektrische Element jeweils mit einem Vorverstärker an den Differenzverstärker angeschlossen werden. Eventuell durch die Vorverstärker hervorgerufene Störungen werden aufgrund der Gleichtaktunterdrückung des Differenzverstärkers - wie die übrigen Störsignale - unterdrückt und somit wirkungslos. Es wird somit mit den Vorverstärkern eine hohe Verstärkung erreicht, ohne dass Störungen verstärkt werden.

Vorzugsweise handelt es sich bei den beiden Vorverstärkern um identische Vorverstärker, um eine maximale Störunterdrückung der eventuell von den Vorverstärkern selbst erzeugten oder der in den Vorverstärker eingekoppelten Störsignale zu erreichen.

Bei dem das elektrische Verhalten der Empfangseinrichtung im beleuchtungsfreien Fall nachbildenden elektrischen Element kann es sich beispielsweise um eine mit der Empfangseinrichtung ("Nutz"-Empfangseinrichtung) der Empfängerschaltung identische Empfangseinrichtung ("Dummy-Empfangseinrichtung") handeln, die derart abgedunkelt ist, dass kein Licht darauf fallen kann. Die "Nutz"-Empfangseinrichtung und die "Dummy"-Empfangseinrichtung sind vorzugsweise auf einem Halbleiterchip gemeinsam monolithisch integriert, um sicher zu stellen, dass beide Empfangseinrichtungen ein annähernd gleiches elektrisches Verhalten aufweisen.

Alternativ kann das das elektrische Verhalten der Nutz-Empfangseinrichtung im beleuchtungsfreien Fall nachbildende elektrische Element auch durch eine Kapazität gebildet sein, die das kapazitive Verhalten der Nutz-Empfangseinrichtung nachbildet.

Als Vorverstärker werden vorzugsweise Transimpedanzverstärker eingesetzt.

Darüber hinaus wird es als vorteilhaft angesehen, wenn die optische Empfängerschaltung eine integrierte Regelschaltung aufweist, mit der eine Regelung der Rückkoppelwiderstände der beiden Transimpedanzverstärker möglich ist. Durch Umschalten der Widerstandsgröße der Rückkoppelwiderstände lässt sich die Verstärkung der Transimpedanzverstärker und damit mittelbar auch die Bandbreite der Empfängerschaltung benutzerseitig von außen einstellen.

Um einen möglichst symmetrischen Aufbau der optischen Empfängerschaltung zu gewährleisten, wird es als vorteilhaft angesehen, wenn die integrierte Regelschaltung jeweils an die Rückkoppelwiderstände beider Transimpedanzverstärker angeschlossen ist.

Für einen symmetrischen Betrieb der optischen Empfängerschaltung und damit für eine maximale Störunterdrückung ist es vorteilhaft, wenn die Empfangseinrichtung und das nachbildende elektrische Element jeweils an dieselbe Versorgungsspannung angeschlossen sind. Vorzugsweise wird an die Versorgungsspannung ein Tiefpass angeschlossen, der hochfrequente Störungen aus der Versorgungsspannung herausfiltert.

Bei den Empfangseinrichtungen handelt es sich vorzugsweise um Fotodioden.

Die Empfängerschaltung ist vorzugsweise in einem TO-46-Gehäuse oder in einem entsprechenden Kunststoffgehäuse (z.B. TSSOP10 oder VQFN20) verpackt.

Ausführungsbeispiel:

Zur Erläuterung der Erfindung zeigt eine Figur ein Ausführungsbeispiel für eine erfindungsgemäße optische Empfängerschaltung.

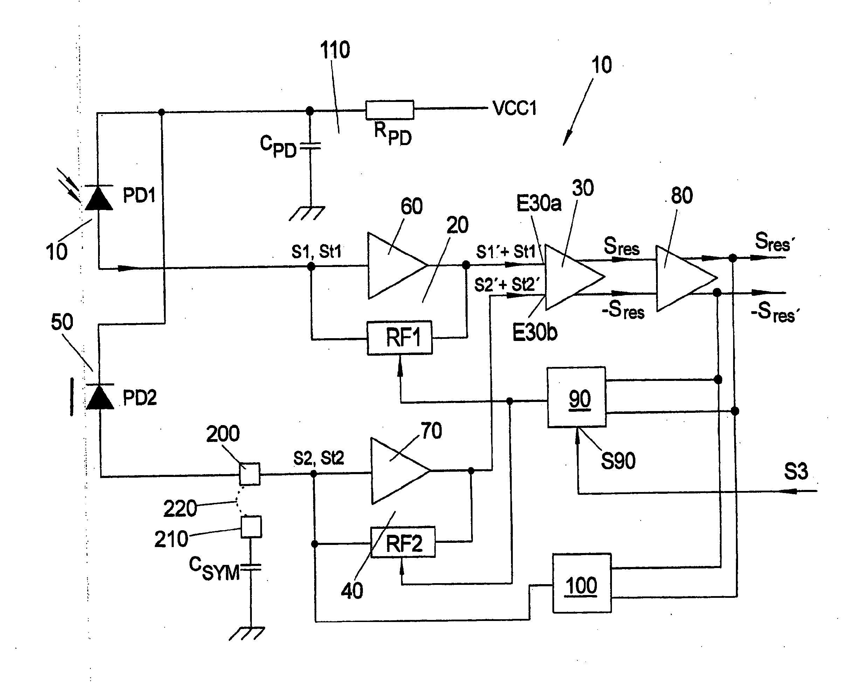

In der Figur erkennt man eine Fotodiode 10 als Empfangseinrichtung ("Nutz"-Empfangseinrichtung), die über einen Transimpedanzverstärker 20 an einen Anschluss E30a eines Differenzverstärkers 30 angeschlossen ist. Der andere Eingang E30b des Differenzverstärkers 30 ist über einen weiteren als Transimpedanzverstärker ausgeführten Vorverstärker 40 mit einer "Dummy"-Fotodiode 50 als "Dummy"-Empfangseinrichtung verbunden, die das elektrische Verhalten der Empfangseinrichtung 10 im beleuchtungsfreien Fall elektrisch nachbildet.

Der Transimpedanzverstärker 20 ist durch einen Spannungsverstärker 60, beispielsweise einen Operationsverstärker, gebildet, der mit einem Rückkoppelwiderstand RF1 beschaltet ist. In entsprechender Weise ist der weitere Transimpedanzverstärker 40 durch einen Spannungsverstärker, beispielsweise einen mit dem Operationsverstärker 60 identischen Operationsverstärker 70, gebildet, der mit einem weiteren Rückkoppelwiderstand RF2 (RF1 = RF2) beschaltet ist.

Der Differenzverstärker 30 ist ausgangsseitig mit einem zweiten Differenzverstärker 80 verbunden, der das Ausgangssignal des ersten Differenzverstärkers 30 weiter verstärkt und an seinem Ausgang ein dem optischen Signal der Fotodiode 10 entsprechendes Ausgangssignal $S_{res}'$ bzw. das dazu invertierte Signal $-S_{res}'$ erzeugt.

Ausgangsseitig ist der Differenzverstärker 80 mit einer AGC (Amplitude Gain Control) Regelschaltung 90 verbunden, die ausgangsseitig mit den beiden Rückkoppelwiderständen RF1 und RF2 in Verbindung steht. Die Regelschaltung 90 stellt den Widerstandswert RF1 und RF2 in Abhängigkeit von einem an einem Steuereingang S90 der Regelschaltung 90 anliegenden Steuersignal S3 ein. Über diesen Steuereingang S90 kann die Verstärkung der beiden Transimpedanzverstärker 20 und 40 benutzerseitig von außen eingestellt werden. Da die erreichbare Verstärkung V und die Bandbreite B der Schaltung näherungsweise miteinander in Beziehung stehen (V*B = constant), kann über ein Verändern der Verstärkung auch die erreichbare Bandbreite benutzerseitig eingestellt werden. Alternativ oder zusätzlich kann die Regelschaltung 90 auch zusätzliche Kapazitäten (oder Induktivitäten) parallel oder in Reihe zu den beiden Rückkoppelwiderständen RF1 und RF2 schalten, um das Rückkoppelverhalten zu modifizieren und um beispielsweise das Auftreten von elektrischen Schwingungen zu vermeiden. Darüber hinaus ist die Regelschaltung 90 mit den Ausgangssignalen Sres' und -Sres' des zweiten Verstärkers 80 beaufschlagt, so dass die Regelschaltung beispielsweise ein Übersteuern des Verstärkers verhindern kann.

Darüber hinaus ist die optische Empfängerschaltung mit einer DCC-Schaltung 100 (DCC: Duty Cycle Control) ausgestattet, die eine Regelung der optischen Empfängerschaltung bewirkt. Die DCC-Schaltung 100 bzw. die durch sie gebildete Duty-Cycle-Regelung (Offset Regelung) regelt die Abtast-Schwelle für die nachfolgenden Differenzverstärker, so dass das Signal beim 50% Wert der Amplitude abgetastet wird und sich damit keine Signalpulsverzerrungen (duty cycle) ergeben. Dies kann durch Einspeisen eines Stromes in jeweils einen der vorverstärker (Transimpedanzverstärker) erfolgen oder auch durch Einspeisen einer Spannung an den Eingängen der Differenzverstärker direkt.

Wie sich der Figur darüber hinaus entnehmen lässt, sind die beiden Fotodioden 10 und 50 beide jeweils an eine Versorgungsspannung VCC1 angeschlossen, die mit einem Tiefpass 110 - bestehend aus einer Kapazität $C_{PD}$ und einem Widerstand $R_{PD}$ - verbunden ist.

Die optische Empfängerschaltung wird wie folgt betrieben:
Im Falle einer Lichteinstrahlung auf die Fotodiode 10 wird ein elektrisches Signal S1 in den Transimpedanzverstärker 20 eingespeist und von diesem verstärkt. Am Ausgang des Transimpedanzverstärkers 20 wird somit das verstärkte Signal S1' gebildet, das zu dem Eingang E30a des Differenzverstärkers 30 gelangt.

Störsignale St1, die in die Fotodiode 10 bzw. in die Zuleitungen der Fotodiode 10 eingekoppelt bzw. eingespeist werden, werden von dem Transimpedanzverstärker 20 ebenfalls verstärkt und als verstärkte Störsignale St1' zum Differenzverstärker 30 übertragen.

Die Dummy-Fotodiode 50 ist - wie dies der senkrechte Balken in der Figur andeutet - derart abgedunkelt, dass kein Licht auf die Dummy-Fotodiode 50 fallen kann. Die Fotodiode 50 ist somit optisch inaktiv und hat lediglich die Funktion eines "Dummys".

Trotz allem können in die "Dummy"-Fotodiode 50 Störsignale ST2 eingekoppelt werden, beispielsweise über die Zuleitungen der Fotodiode 50. Diese Störsignale ST2 werden von dem weiteren Transimpedanzverstärker 40 verstärkt und gelangen als verstärkte Störsignale ST2' zu dem weiteren Eingang E30b des Differenzverstärkers 30. Am Ausgang des Differenzverstärkers 30 werden somit Ausgangssignale $S_{res}$ - und die dazu invertierten Signale $-S_{res}$ - gebildet gemäß

$$S_{res}=S1+St1-(S2+St2).$$

Da die "Dummy-Fotodiode 50 abgedunkelt ist und damit kein eigenes Nutzsignal S2 erzeugen kann, gilt:

$$S2=0$$

Darüber hinaus ist anzunehmen, dass Störsignale, die in die Fotodiode 10 eingekoppelt werden, gleichzeitig auch in die "Dummy"-Fotodiode 50 eingekoppelt werden, so dass folgende Annahme gerechtfertigt ist:

$$St1 = St2.$$

Somit ergibt sich am Ausgang des Differenzverstärkers 30 insgesamt ein Ausgangssignal gemäß

$$S_{res} = S1,$$

weil nämlich St1=St2 und S2=0.

Zusammengefasst lässt sich damit feststellen, dass durch die Verwendung zweier gleichartiger Eingangszweige - gebildet durch die Fotodiode 10 und durch die "Dummy"-Fotodiode 50 - die Empfängerschaltung sehr störunanfällig ist, da die eingangsseitig von den beiden Fotodioden 10 und 50 "mitgelieferten" Störsignale St1 und St2 aufgrund der Gleichtaktunterdrückung des Differenzverstärkers 30 weitgehend eliminiert werden.

Der Tiefpass 110 an der Stromversorgungsspannung VCC1 dient im Übrigen dazu, hochfrequente Störungen der Spannungsversorgung VCC1 herauszufiltern, so dass diese den Differenzverstärker 30 gar nicht erst erreichen können.

In der Figur sind darüber hinaus Anschlusspads 200 und 210 erkennbar, die mittels eines Bonddrahtes 220 miteinander verbunden werden können. Durch einen solchen Bonddraht 220 lässt sich die Kapazität $C_{SYM}$ an den weiteren Transimpedanzverstärker 40 anschließen. Die Kapazität $C_{SYM}$ kann dabei die "Dummy"-Fotodiode 50 ersetzen, wenn eine solche Fotodiode 50 nicht zur Verfügung steht. Die Kapazität $C_{SYM}$ ist dann vorzugsweise derart bemessen, dass sie im Wesentlichen der Kapazität der "fehlenden" Dummy-Fotodiode 50 bzw. der Kapazität der Nutzdiode 10 entspricht.

Bezugszeichenliste

| | |
|---|---|
| 10 | Fotodiode |
| 20 | Transimpedanzverstärker |
| 30 | Differenzverstärker |
| 40 | Weitere Transimpedanzverstärker |
| 50 | "Dummy"-Fotodiode |
| 60 | Operationsverstärker |
| 70 | Operationsverstärker |
| 80 | Zweiter Differenzverstärker |
| 90 | AGC-Schaltung |
| 100 | DCC-Schaltung |
| 110 | Tiefpass |
| 200, 210 | Pad-Anschlüsse |

| | |
|---|---|
| 220 | Bonddraht |
| RF1, RF2 | Steuerbare Rückkoppelwiderstände |

**Patentansprüche**

1. Optische Empfängerschaltung
   mit einem Differenzverstärker (30) mit zwei Eingängen,
   mit einer optischen Empfangseinrichtung (10), die an einen der zwei Eingänge (E30a) des Differenzverstärkers (30) angeschlossen ist, und
   mit einem das elektrische Verhalten der Empfangseinrichtung (10) im beleuchtungsfreien Fall nachbildenden elektrischen Element (50), das an den anderen der beiden Eingänge (E30b) des Differenzverstärkers (30) angeschlossen ist,
   wobei die Empfangseinrichtung (10) und das elektrische Element (50) jeweils über einen Vorverstärker (20, 40) an den Differenzverstärker (30) angeschlossen sind,
   wobei die Vorverstärker (20, 40) Transimpedanzverstärker sind,
   **dadurch gekennzeichnet,**
   **dass** die beiden Vorverstärker (20, 40) identisch sind, und
   **dass** eine integrierte Regelschaltung (90) mit einem Steuereingang (S90) vorhanden ist, mit der die Größe des Rückkoppelwiderstandes der Transimpedanzverstärker (20, 40) über ein an dem Steuereingang (S90) anliegendes Steuersignal (S3) benutzerseitig einstellbar ist.

2. Optische Empfängerschaltung nach einem der vorangehenden Ansprüche, **dadurch gekennzeichnet, dass** das elektrische Element (50) durch eine weitere, abgedunkelte Empfangseinrichtung gebildet ist.

3. Optische Empfängerschaltung nach Anspruch 2, **dadurch gekennzeichnet, dass** die Empfangseinrichtung (10) und die weitere Empfangseinrichtung (50) auf einem Chip monolithisch integriert sind.

4. Optische Empfängerschaltung nach einem der vorhergehenden Ansprüche, **dadurch gekennzeichnet, dass** die integrierte Regelschaltung symmetrisch an die Rückkoppelwiderstände der beiden Transimpedanzverstärker (20, 40) angeschlossen ist.

5. Optische Empfängerschaltung nach einem der vorangehenden Ansprüche, **dadurch gekennzeichnet, dass** die beiden Empfangseinrichtungen (10, 50) an eine gemeinsame Versorgungsspannung (VCC1) angeschlossen sind.

6. Optische Empfängerschaltung nach Anspruch 5, **dadurch gekennzeichnet, dass** an die Versorgungsspannung (VCC1) ein Tiefpass angeschlossen ist.

7. Optische Empfängerschaltung nach einem der vorangehenden Ansprüche, **dadurch gekennzeichnet , dass** die beiden Empfangseinrichtungen (10, 50) Fotodioden sind.

8. Empfängerschaltung nach einem der vorangehenden Ansprüche, **dadurch gekennzeichnet, dass** die Empfängerschaltung in einem TO-46-Gehäuse, einem TSSOP10-Gehäuse oder einem VQFN20-Gehäuse verpackt ist.

9. Empfängerschaltung nach Anspruch 8, **dadurch gekennzeichnet, dass** der zumindest eine Steueranschluss (S30) durch ein Anschlusspin des Gehäuses gebildet ist.

**Claims**

1. Optical receiver circuit
having a differential amplifier (30) with two inputs,
having an optical receiving apparatus (10), which is connected to one of the two inputs (E30a) of the differential amplifier (30), and
having an electrical element (50), emulating the electrical behaviour of the receiving apparatus (10) in an illumination free case, which electrical element (50) is connected to the other one of the two inputs (E30b) of the differential amplifier (30),
wherein each of the receiving apparatus (10) and the electrical element (50) is connected to the differential amplifier (30) by a respective pre-amplifier (20, 40),
wherein the pre-amplifiers (20, 40) are transimpedence amplifiers,
**characterized in that**
the two pre-amplifiers (20, 40) are identical, and an integrated regulating circuit (90) having a control input (S90) is provided, by which regulating circuit (90) the value of the feedback resistor of the transimpedance amplifiers (20, 40) is adjustable from a user-side via a control signal (S3) at the control input (S90).

2. Optical receiver circuit according to any of the preceding claims, **characterized in that** the electrical element (50) is formed by a further shaded receiving apparatus.

3. Optical receiver circuit according to claim 2, **characterized in that** the receiving apparatus (10) and the further receiving apparatus (50) are monolithically integrated on a chip.

4. Optical receiver circuit according to any of the preceding claims, **characterized in that** the integrated regulating circuit is symmetrically connected to the feedback resistors of the two transimpedance amplifiers (20, 40).

5. Optical receiver circuit according to any of the preceding claims, **characterized in that** the two receiving apparatuses (10, 50) are connected to a common supply voltage (VCC1).

6. Optical receiver circuit according to claim 5, **characterized in that** a low pass is connected to the supply voltage (VCC1).

7. Optical receiver circuit according to any of the preceding claims, **characterized in that** the two receiving apparatuses (10, 50) are photodiodes.

8. Receiver circuit according to any of the preceding claims, **characterized in that** the receiving circuit is packaged in a TO-46 housing, a TSSOP10 housing or a VQFN20 housing.

9. Receiver circuit according to claim 8, **characterized in that** the at least one control connection (S30) is formed by a connection pin of the housing.

**Revendications**

1. Circuit récepteur optique comportant
un amplificateur différentiel (30) avec deux entrées,
un dispositif (10) de réception optique raccordé à l'une des deux entrées (E30a) de l'amplificateur différentiel (30),
et un élément électrique (50) imitant le comportement électrique du dispositif (10) de réception en l'absence d'éclairage et qui est raccordé à l'autre des deux entrées (E30b) de l'amplificateur différentiel (30),
le dispositif (10) de réception et l'élément électrique (50) étant raccordés respectivement à l'amplificateur différentiel (30) via un préamplificateur (20,40),
les préamplificateurs (20,40) étant des amplificateurs à transimpédance,
**caractérisé en ce que** les deux préamplificateurs (20,40) sont identiques et **en ce qu'**il y a un circuit (90) de régulation intégré avec une entrée (S90) de commande permettant de paramétrer la grandeur de la résistance de rétroaction des amplificateurs (20,40) à transimpédance au moyen d'un signal (S3) de commande appliqué à l'entrée (S90) de commande côté utilisateur.

2. Circuit récepteur optique selon l'une des revendications précédentes **caractérisé en ce que** l'élément électrique (50) est formé d'un dispositif de réception supplémentaire obscurci.

3. Circuit récepteur optique selon la revendication 2 **caractérisé en ce que** le dispositif (10) de réception et le dispositif (50) de réception supplémentaire sont intégrés monolithiquement sur une puce.

4. Circuit récepteur optique selon l'une des revendications précédentes **caractérisé en ce que** le circuit de régulation intégré est raccordé symétriquement aux résistances de rétroaction des deux amplificateurs (20,40) à impédance.

5. Circuit récepteur optique selon l'une des revendications précédentes **caractérisé en ce que** les deux dispositifs (10,50) de réception sont raccordés à une tension (VCC1) d'alimentation commune.

6. Circuit récepteur optique selon la revendication 5 **caractérisé en ce qu'**un filtre passe-bas est raccordé à la tension (VCC1) d'alimentation.

7. Circuit récepteur optique selon l'une des revendications précédentes **caractérisé en ce que** les deux dispositifs (10,50) de réception sont des photodiodes.

8. Circuit récepteur selon l'une des revendications précédentes **caractérisé en ce que** le circuit récepteur est enfermé dans un boîtier TO-46, TSSOP10 ou VQFN20.

9. Circuit récepteur selon la revendication 8 **caractérisé en ce que** l'au moins un connecteur (S30) de commande est formé d'une broche de connexion du boîtier.

S_res'  -S_res'  S3

80

10

VCC1

S90

90

100

R_PD

30

E30a

S1'+ St1

20

E30b

S2'+ St2'

70

S_res  -S_res

RF1

60

RF2

40

110

C_PD

S1, St1

S2, St2

PD1

200

PD2

220

210

C_SYM

10

50

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1261152 A2
- US 5410145 A
- EP 0409278 B1

**In der Beschreibung aufgeführte Nicht-Patentliteratur**

- **JENS MÜLLRICH ; HERBERT THURNER ; ERNST MÜLLNER ; JOSEPH F. JENSEN ; SENIOR MEMBER ; WILLIAM E. STANCHINA ; M. KARDOS ; HANS-MARTIN REIN.** High Gain Transimpedance Amplifier in InP-Based HBT Technology for the Receiver in 40-Gb/s Optical-Fiber TDM Links. *IEEE - IEEE Journal of Solid State Circuits,* September 2000, vol. 35 (9), 1260-1265